# EUROPÄISCHE PATENTSCHRIFT

(11) **EP 0 399 415 B1**
(45) Veröffentlichungstag und Bekanntmachung des Hinweises auf die Patenterteilung: **27.09.1995**
(21) Anmeldenummer: 90109547.1
(22) Anmeldetag: 19.05.1990
(51) Int. Cl.: C08G 69/44

(54) **Thermoplastische verarbeitbare elastomere Blockcopolyetheresteretheramide, Verfahren zu ihrer Herstellung und ihre Verwendung**
Thermoplastic elastomeric block copolyetheresteretheramides, process for their preparation and their use
Copolyétheresterétheramides à structure bloc, thermoplastiques, élastomères, procédé de leur préparation et leur utilisation

(30) Priorität: 24.05.1989 DE 3917017
(43) Veröffentlichungstag der Anmeldung: 28.11.1990
(73) Patentinhaber: EMS-INVENTA AG, 8001 Zürich (CH)
(72) Erfinder: Liedloff, Hanns-Jörg, Dr. rer. nat., CH-7013 Domat/Ems (CH)
(74) Vertreter: Müller-Boré & Partner Patentanwälte

(56) Entgegenhaltungen:
- EP-A- 0 023 956
- EP-A- 0 360 311
- CH-A- 655 941
- GB-A- 2 144 441

## Beschreibung

Die vorliegende Erfindung betrifft thermoplastisch verarbeitbare elastomere Blockcopolyetheresteretheramide, ein Verfahren zu ihrer Herstellung und ihrer Verwendung zur Herstellung von Formkörpern, beispielsweise durch Extrusion, Spritzgiessen, Verbundspritzgiessen, Spritzgussschweissen oder Blasformen.

Die erfindungsgemässen Blockcopolyetheresteretheramide gehören wie die in der DE-PS 30 06 961 beschriebenen Polyetherpolyamide oder die in der DE-PS 25 23 991 beschriebenen Polyetheresteramidblockmischpolymerisate (Polyetheresteramide) zur Klasse der Polyamidelastomeren (PA-Elastomere). Durch den Begriff "Blockcopolyetheresteretheramid" soll betont werden, dass die Polyetheranteile der erfindungsgemässen Produkte durch Ester- beziehungsweise Amidbindungen mit den Polyamidsegmenten verknüpft sind. Nachfolgend wird der Einfachheit halber auch der Begriff "PA-Elastomere" verwendet.

Zu den wichtigsten heute am Markt anzutreffenden PA-Elastomeren gehören zweifellos diejenigen, deren Polyamidsegmente -CO-D-CO-aus der Polymerisation oder der Polykondensation von Caprolactam und/ oder Laurinlactam oder der korrespondierenden ω-Amino-α-carbonsäuren in Gegenwart einer Dicarbonsäure hervorgegangen sind. Man spricht auch in Analogie zur Struktur der so erzeugten Polyamidsegmente von PA-6- beziehungsweise PA-12-Elastomeren.

Der Aufbau dieser PA-Elastomeren kann auf zweierlei Weise erfolgen:
Gemäss DE-PS 25 23 991 werden carboxylgruppenterminierte PA-Segmente mit α,ω -Dihydroxy-polyethern verestert und man gelangt so zu den Polyetheresteramiden.

Gemäss der DE-PS 30 06 961 werden PA-Segmente mit α,ω - Diamino-polyethern zu Polyetheramiden umgesetzt. Beide Wege zur Synthese von PA-Elastomeren sind einer Reihe von Beschränkungen unterworfen: So ist es weder nach der Lehre der DE-PS 25 23 991, noch der DE-PS 30 06 961 möglich, in diskontinuierlichen Verfahren ein hochflexibles PA-6-Elastomer mit einem Biege-Elastizitätsmodul von weniger als etwa 200 N/mm² (im trockenen Zustand gemessen) und akzeptablen Verarbeitungs- und Gebrauchseigenschaften herzustellen.

Die DE-PS 25 23 991 schreibt verschiedene lineare oder verzweigte aliphatische Polyoxyalkylenglykole als flexibilisierend wirkende Komponenten vor, im wesentlichen die folgenden:
I : Polyoxyethylenglykol = α,ω-Dihydroxy-poly(oxyethylen),
II : Polyoxypropylenglykol = α,ω-Dihydroxy-poly(oxy-1,2-propylen),
III : Polyoxytetramethylenglykol = α,ω -Dihydroxy-poly(oxytetramethylen),
IV : Copoly(ethylenglykol-propylenglykol).

Mit der Komponente I können zwar hochflexible Produkte hergestellt werden, diese haben aber den entscheidenden Nachteil, dass sie im Kontakt mit feuchten Medien erhebliche Mengen Wasser aufnehmen. So entspricht bei 50 Gew.-% Segmenten von I die Wasseraufnahme etwa dem Gewicht des betreffenden Blockpolymeren.

Polyoxypropylenglykol (II) ist, wenn seine mittlere Molmasse den für hochflexible, gut verarbeitbare PA-6-Elastomere nötigen Wert von mehr als 1000 überschreitet, mit den betreffenden kurzkettigen, carboxylterminierten PA-6-Segmenten (Mn ≧ 1300) nur sehr begrenzt mischbar, so dass es nicht zum Aufbau eines hochmolekularen Polymeren kommen kann. Ein weiterer wesentlicher Nachteil zumindest für diskontinuierliche Herstellverfahren ist es, dass Polyoxypropylenglykol sehr temperaturempfindlich ist und deshalb unter den üblichen Polykondensationsbedingungen zur Verfärbung und Zersetzung neigt und zudem wegen seiner (einen) sekundären Alkoholfunktion nur schwierig zu verestern ist.

Für Polyoxytetramethylenglykol (III) besteht ebenfalls das Problem der schlechten Mischbarkeit mit PA-6-Segmenten, welche die Reihe der potentiellen Polymeren auf weniger flexible Produkte begrenzt.

Bei Verwendung von IV treten die für I und II genannten Mängel ebenfalls auf.

Nach der Lehre der DE-PS 30 06 961 ist die Herstellung von PA-6-Elastomeren möglich durch Kondensation von carboxylgruppenterminierten PA-6 mit
V : α,ω -Diamino-poly(oxy-1.2-propylen) oder
VI : α,ω -Bis-3-aminopropyl-poly(oxytetramethylen),
wobei als Kettenlängenregler der PA-6-Segmente vorzugsweise eine technische, hydrierte oder nicht hydrierte, dimerisierte Fettsäure mit 36 C-Atomen (die eine kleine Menge trimerisierter Fettsäure mit 54 C-Atomen enthalten kann) eingesetzt wird.

Mit dem Einsatz der flexibilisierenden Komponente V ist die Herstellung eines hochflexiblen PA-6-Elastomeren ebensowenig möglich, wie mit der damit vergleichbaren Komponente II.

Der Grund dafür liegt in der begrenzten Mischbarkeit von PA-6-Segmenten (Mn ≧ 1300) mit den betreffenden Poly(oxy-1,2-propylen)-Segmenten. Die thermische Stabilität des Diamins V ist allerdings bedeutend höher als die des Diols II. Auch seine Reaktivität gegenüber Carboxylgruppen ist grösser als die des Diols II.

Der Verwendung der Komponente VI zur Erzeugung eines hochflexiblen PA-6-Elastomeren steht seine schlechte Mischbarkeit mit den PA-Segmenten entgegen. Darüberhinaus ist der Diaminopolyether VI wegen seiner aufwendigen Synthese so teuer, dass er nicht für die Herstellung eines hochflexiblen PA-6- oder PA-12-Elastomeren in Frage kommt. Für die Synthese eines hochflexiblen PA-12-Elastomeren kann nach Lehre der DE-PS 30 06 961 weder mit der aminogruppenterminierten Polyetherkomponente V, noch mit VI ein zufriedenstellendes Resultat erzielt werden. Das Polyetherdiamin VI scheidet aus dem erwähnten Grund aus, mit dem Diamin V sind, mit Anteilen von mehr als ca. 30 Gew.-% im PA-12-Elastomer, nur gelb bis braun verfärbte, bisweilen stark abgebaute Produkte herstellbar.

Wird gemäss DE-PS 25 23 991 ein carboxylgruppenterminiertes PA-12 mit den vorstehend genannten Komponenten I bis IV polykondensiert, so gelten für I, II und IV die bereits genannten Nachteile. Mit III als flexibilisierende Komponente sind im allgemeinen PA-12-Elastomere fast beliebiger Flexibilität mit sehr guten Verarbeitungs- und Gebrauchseigenschaften herzustellen. Dennoch weisen diese PA-12-Elastomere noch folgende wesentliche Nachteile auf:
Der erste besteht in der ungenügenden Verträglichkeit von PA-12-Segmenten mit einer durchschnittlichen Molmasse von mehr als etwa 1000 und Segmenten der flexibilisierenden Komponente III mit einer mittleren Molmasse von mehr als etwa 1100 in hochflexiblen Elastomeren mit einem Anteil von III, der mehr als etwa 45 Gew.-% beträgt. Die mangelnde Verträglichkeit ist daran zu erkennen, dass die betreffenden PA-12-Elastomere im erstarrten (auskristallisierten) Zustand milchig-trüb aussehen und die Festigkeit daraus hergestellter Teile quer zur Verarbeitungsrichtung infolge der Delaminierbarkeit der Schichtstrukturen vermindert ist. In engem Zusammenhang damit steht die erhöhte mechanische Verschleissanfälligkeit, zum Beispiel der Abrieb derartiger PA-12-Elastomer-Produkte. Die aufgezeigten Nachteile lassen sich durch Variation der Herstellungsverfahren nicht beseitigen.

Der zweite Nachteil dieser PA-12-Elastomeren liegt darin, dass sie für ein Verbundspritzguss- oder Spritzgiessschweissen (injection welding) nicht uneingeschänkt geeignet sind. Es handelt sich bei dem letzteren Verfahren um ein spezielles Spritzgiessverfahren, bei dem ein Polymeres A in einer herkömmlichen Spritzgiessform auf ein dort eingelegtes, erstarrtes Teil aus demselben oder normalerweise einem anderen Polymeren aufgespritzt wird. Auf diese Weise erhält man Fertigteile, deren Funktionen durch geeignete Polymerkombinationen den anwendungsspezifischen Anforderungen optimal angepasst werden können. Beispielsweise ist es mit dem Verfahren möglich, die Elastizität in einem gegebenen Fertigteil auf die Bereiche zu beschränken, wo sie tatsächlich von Vorteil ist und den Rest des Teils starr zu halten. Das Verfahren bietet darüberhinaus erhebliche Vorteile bei der farblichen Gestaltung von Spritzgussteilen.

Die Grundvoraussetzung für die Anwendbarkeit des Spritzgiessschweissens auf ein bestimmtes Polymerpaar ist eine gute Verbundfestigkeit an den Kontaktflächen zwischen den Polymeren.

Die EP-OLS-23956 beansprucht formell Polyamidelastomere, in denen gleichzeitig Blöcke aus Polyetherdiamin und Polyetherdiol mit Polyamid-Blöcken kombiniert sind, ohne sie substantiell zu belegen oder die spezifischen Eigenschaften solcher Polymeren aus 3 unterschiedlichen Blöcken zu spezifizieren. Das hier beanspruchte Verfahren beschreibt allgemein eine sehr feine Verteilung von Polyetherkomponente und oligomerem Polyamid und benötigt sehr lange Polykondensationszeiten für technisch verwendbare hochmolekulare Produkte.

Eine hohe Festigkeit des Haftverbundes kommt dadurch zustande, dass das aufgespritzte Polymer eine dünne Schicht des eingelegten Kunststoffteils aufschmilzt und die Schmelzen der beiden Materialien sich vermischen. Die Mischbarkeit der Polymeren muss selbstverständlich von vorneherein sichergestellt sein. Bei inkompatiblen Polymeren versagt das Verfahren naturgemäss.

Für PA-12-Elastomere mit der Cokomponente III gemäss DE-PS 25 23 991 bedeutet letzteres, dass man sie vorzugsweise mit anderen Elastomeren dieses Typs oder mit unmodifiziertem, schlagzähmodifiziertem oder verstärktem PA-12 kombiniert. Die in diesen Fällen erzielte Verbundfestigkeit ist im allgemeinen gut, doch genügt sie insbesondere dann nicht allen Anforderungen, wenn das Molekulargewicht der PA-12-Elastomeren vergleichsweise niedrig ist.

Schwierig wird die Erzeugung eines guten Haftverbundes bei relativen Viskositäten (als Mass des Molekulargewichts der PA-12-Elastomeren) von weniger als 2,1 (gemessen an 0.5 %-igen Lösungen in m-Kresol bei 25°C gemäss DIN 53727).

Die vorliegende Erfindung hat sich die Aufgabe gestellt, neue Polyamidelastomere zu schaffen, welche die vorstehend aufgezeigten zahlreichen Nachteile der bekannten Produkte nicht mehr aufweisen.

Diese Aufgabe wird durch die Blockcopolyetheresteretherpolyamide des Patentanspruchs 1 gelöst.

Die Lösung gelingt im besonderen durch Polyamidelastomere, zu deren Aufbau im Gegensatz zum Stand der Technik in Kombination mit Polyamidblöcken Struktureinheiten der Copolyetheramide und solche der Copolyetheresteramide, gleichzeitig verwendet werden. Unerwartet lassen sich damit im Vergleich mit den Polyamidelastomeren nach dem Stand der Technik wesentliche Eigenschaftsänderungen erreichen, wie sie durch Beispiele und Vergleichsbeispiele belegt werden.

Diese Aufgabe wird durch die thermoplastisch verarbeitbaren elastomeren Blockcopolyetheresteretherpolyamide aus sich wiederholenden Einheiten der allgemeinen Formel gemäss Patentanspruch 1 gelöst.

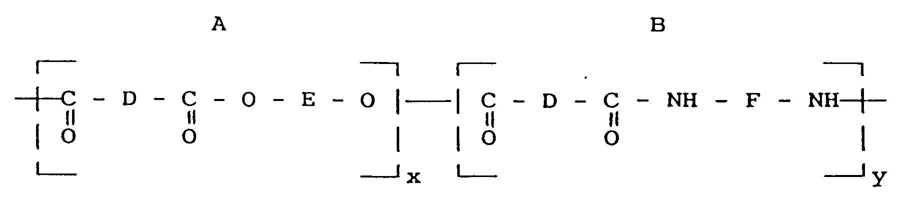

Damit betrifft die Erfindung thermoplastisch verarbeitbare Blockcopolyetheresteretheramide aus verschiedenen Polyamidelastomer-Blöcken und ein Verfahren zu ihrer Herstellung, welches darin besteht, dass carboxylterminierte Polyamide (Komponente -CO-D-CO-) mit äquimolaren Mengen an α,ω -Dihydroxy-poly(oxytetramethylen) (Komponente -O-E-O-) beziehungsweise α,ω -Diamino-poly(oxy-1,2-propylen) (Komponente -NH-F-NH-) polykondensiert werden.

Die erfindungsgemässen Blockcopolyetheresteretheramide decken einen sehr breiten Flexibilitätsbereich ab. Ausgedrückt in Werten des Biege-Elastizitätsmodulsgemessen nach DIN 53452 an trockenen Prüfkörpern - liegt dieser Bereich etwa zwischen 40 und 700 N/mm². Die erfindungsgemässen Produkte eignen sich zur Herstellung spritzgegossener, extrudierter, blasgeformter oder spritzgiessgeschweisster Teile. Ebensogut können andere Verarbeitungsverfahren für diese Produkte angewendet werden.

Vorzugsweise werden die carboxylterminierten Polyamide aus Lactamen mit 6 bis 12 Kohlenstoffatomen oder linearen ω -Amino-α-carbonsäuren mit 6 bis 12 Kohlenstoffatomen und Dicarbonsäuren mit 6 bis 36 Kohlenstoffatomen zur Carboxylgruppenterminierung erhalten. Bevorzugt werden Caprolactam, Laurinlactam, ω -Aminocapronsäure, ω -Aminoundecansäure und ω -Aminolaurinsäure, wobei die Monomeren mit 11 bis 12 C-Atomen ganz besonders bevorzugt sind, zusammen mit Adipinsäure, Azelainsäure, Sebazinsäure, Dodecandisäure sowie dimerisierter Fettsäure verwendet. Verfahren zur Herstellung carboxylterminierter Polyamide sind bekannt. Ebenfalls bekannt sind verschiedene Verfahren zur Verknüpfung dieser Polyamide mit α,ω -Dihydroxy-poly(oxytetramethylen) zur korrespondierenden Etheresteramid-Teilstruktur. Man arbeitet gewöhnlich unter reduziertem Druck bei Temperaturen zwischen 200 und 280°C in Gegenwart wirksamer Veresterungs-/Umesterungskatalysatoren.

Zinn-(II)-Verbindungen, beispielsweise Sn(II)-oxid, Sn(II)-Salze von Mono- oder Dicarbonsäuren sowie Zirkonverbindungen, zum Beispiel Zr-tetra-isopropylat, sind unter anderem als Katalysatoren geeignet.

Die Bildung der Etheramid-Teilstruktur läuft ebenfalls in dem oben genannten Temperaturbereich ab. Der Aufbau der Teilstrukturen kann nacheinander oder gleichzeitig geschehen. Die Synthese einer der beiden oder beider Teilstrukturen kann auch gleichzeitig mit dem Aufbau der Polyamidsegmente -CO-D-CO- erfolgen. Das zeigt, dass zahlreiche Verfahrensvarianten möglich sind. Näheren Aufschluss darüber geben die Beispiele.

Wie bereits erwähnt, lassen sich die erfindungsgemässen Blockcopolyetheresteretheramide mit anderen Polymeren modifizieren. Die erfindungsgemässen Blockcopolyetheresteretheramide können als Mischung mit Copolyolefinen, die Carboxyl- und/oder Carboxylat- und/oder Carbonsäureanhydridgruppen und/oder andere polare Molekülreste tragen, vorliegen. Sie lassen sich beispielsweise sehr leicht mit Pfropfprodukten aus Ethylen/Propylen- oder Ethylen/Propylen/Dien-Copolymeren und Maleinsäureanhydrid mischen. Darin sind sie mit den PA-Elastomeren des Standes der Technik, wie in der CH-PS 655 941 beschrieben, vergleichbar. Mit dem Zumischen von beispielsweise polaren Copolyolefinen können unter anderem Schmelzindex, Flexibilität, Kerbschlagzähigkeit und Verarbeitbarkeit von PA-Elastomeren positiv beeinflusst werden.

Auch der Zusatz von Verstärkungsmitteln oder Füllstoffen, wie Glasfasern beziehungsweise Mineralien ist möglich. Selbstverständlich können die erfindungsgemässen PA-Elastomere die üblichen Additive, wie Antioxidantien, UV-Schutzmittel, Antistatika, Leitfähigkeitsruss, flammhemmende Zusätze und andere, enthalten.

Die nachfolgenden Beispiele erläutern die Erfindung.

Die relativen Viskositäten der Produkte wurden nach DIN 53727 an 0.5 %-igen Lösungen in m-Kresol bei 25°C gemessen. Mechanische Eigenschaften wurden an trockenen Prüfkörpern gemessen:

Der Biege-Elastizitätsmodul nach DIN 53452, die Kerbschlagzähigkeit nach DIN 53453, die Reissfestigkeit und Reissdehnung gemäss DIN 53455.

Die Messung der Schmelztemperaturen (Maxima) erfolgt mit Hilfe eines DSC-Gerätes, Modell 990, der Firma Du Pont. Alle übrigen Prüfungen sind in den einzelnen Beispielen beschrieben.

### Vergleichsbeispiel 1 (gemäss DE-OS 30 06 961)

Es werden verschiedene Blockcopolyetheramide mit Polyamid-6-segmenten hergestellt. Der Kettenlängenregler der PA-6-Segmente ist nichthydrierte dimerisierte Fettsäure ("Dimersäure") mit einer Molmasse von 570 (Pripol 1013 der Fa. Unichem), die flexibilisierend wirkende Komponente ist ein α,ω -Diamino-poly(oxy-1,2-propylen) mit einer mittleren Molmasse von 1980 (Jeffamin D 2000 der Fa. Texaco). Den einzelnen Chargen wird jeweils 0,3 % (24 g) Antioxidant (Irganox 1330 der Fa. Ciba-Geigy) zugesetzt.

Zur Herstellung der Blockcopolyetheramide wird folgendes Verfahren eingehalten:
Alle Komponenten werden zusammen mit 0,5 Liter Wasser in einen Stahlautoklaven mit Rührer, Thermofühler und den sonst nötigen Einrichtungen eingefüllt. Der Autoklav wird gründlich mit reinem Stickstoff gespült und dann verschlossen.

Unter Rühren werden die Komponenten auf 260°C aufgeheizt, wobei sich ein Innendruck von ca. 18 bar einstellt. Dieser Druck wird zwei Stunden gehalten, dann im Verlauf von einer Stunde durch langsames Öffnen des Autoklaven auf Atmosphärendruck reduziert. Anschliessend wird acht Stunden lang unter Durchleiten von trockenem Stickstoff polykondensiert. Am Ende wird das Polymer durch eine Düse abgepresst und der Schmelzestrang nach Abkühlen in einem Wasserbad granuliert.

Nur die Charge 1.1, ein milchig-trübes Produkt mit einer relativen Viskosität von 1,61, konnte noch granuliert werden. Die übrigen Chargen waren wegen ihrer niedrigen Viskositäten (Molmassen) nicht granulierbar und im erstarrten Zustand spröde. Nähere Einzelheiten dazu finden sich in der nachstehenden Tabelle I.

Aus Charge 1.1 wurden Prüfkörper spritzgegossen und daran der Wert des Biege-Elastizitätsmoduls gemessen. Er betrug 410 N/mm². Die Chargen 2 bis 5 waren nicht spritzgiessbar. Das Beispiel dieser Produkte zeigt, dass auf dieser Basis keine hochflexiblen PA-6-Elastomere zugänglich sind.

**Tabelle I**

| Charakterisierung der Blockcopolyetheramide | | | | | | | | |
|---|---|---|---|---|---|---|---|---|
| Versuch | CL a) | DS b) | P c) | rel. Visk. | Mn PA-Segment d) | Polyether Gew.-% e) | Zustand | Aussehen |
| 1.1 | 5,6 | 0,535 | 1,865 | 1,61 | 5910 | 23,4 | delaminiert f) | trüb perlmuttartig |
| 1.2 | 4,8 | 0,714 | 2,486 | 1,39 | 4040 | 31,3 | spröde | gelblich, undurchsichtig |
| 1.3 | 4,4 | 0,803 | 2,797 | 1,36 | 3395 | 35,2 | spröde | dto. |
| 1.4 | 3,6 | 0,98 | 3,42 | 1,31 | 2315 | 43,2 | spröde | dto. |

| | | | | | | | | |
|---|---|---|---|---|---|---|---|---|
| a) Caprolactam, | | | | | | | | |
| b) Dimersäure, | | | | | | | | |
| c) Jeffamin D 2000 | | | | | | | | |
| d) Berechnet aus der Menge der Dimersäure und dem umgesetzten Caprolactam. Nicht umgesetztes Caprolactam wurde durch 12-stündige Extraktion der Produkte mit Wasser bei 95°C erfasst. Der Caprolactamumsatz lag einheitlich bei etwa 90 %. | | | | | | | | |
| e) Berechnet aus den Rezepturen. | | | | | | | | |
| f) Delaminierung in Verarbeitungsrichtung an Prüfkörpern und extrudierten Strängen. | | | | | | | | |

### Vergleichsbeispiel 2

Die allgemeine Formel dieser Produkte entspricht der in der DE-PS 25 23 991 angegebenen. Im speziellen wird aber von der DE-PS 25 23 991 keine dimerisierte Fettsäure, wie sie hier verwendet wird, als Cokomponente beansprucht. Anstelle einer Titanverbindung als Veresterungskatalysator gemäss der DE-PS 25 23 991 wird hier eine wesentlich wirksamere Zinn-(II)-Verbindung gemäss DE-OS 34 28 404 eingesetzt.

### Versuch 2.1:

In einen Stahlautoklaven mit 100 Liter Fassungsvermögen, Rührer, Thermofühler und Vakuumpumpe werden 28 kg Caprolactam, 8,28 kg dimerisierte Fettsäure und 150 g Irganox 1330 (Antioxidant) eingefüllt, unter Stickstoff und ständigem Rühren auf 225°C aufgeheizt und bei dieser Temperatur 2 h lang gehalten. Anschliessend werden 9,04 kg α,ω -Dihydroxy-poly(oxytetramethylen) mit einer mittleren Molmasse von 1000 (Terathane 1000 der Firma Du Pont) und 10,25 kg eines analog aufgebauten Dihydroxy-polyethers mit einer mittleren Molmasse von 2000 (Terathane 2000 der Firma Du Pont) zusammen mit 100 g des Zinn-(II)-salzes der 2-Ethyl-hexansäure (Sn(II)-dioctoat der Firma Acima/Buchs, CH) eingefüllt.

Der Autoklav wird sofort danach geschlossen und unter einen Stickstoffüberdruck von ca. 1 bar gebracht. Im geschlossenen Autoklaven werden die Komponenten eine Stunde lang bei 250 bis 255°C gerührt. Anschliessend bricht man den Ueberdruck und legt unverzüglich nach Erreichen des Normaldrucks Vakuum an.
Innerhalb von ca. einer Stunde wird ein Innendruck von 1 mbar erreicht. Bei diesem Druck und einer Produkttemperatur von 250°C wird 6 Stunden lang polykondensiert.

Danach wird das erhaltene Blockcopolyetheresteramid abgepresst und granuliert. Die Schmelze des Produkts war milchig-trüb, im erstarrten Zustand undurchsichtig und gelblich. Die relative Viskosität betrug 1,54, das Schmelzpunktmaximum lag bei 212°C und der Anteil des während der Polykondensation abdestillierten Caprolactams betrug 3,95 kg (14,1 % bezogen auf eingesetztes Caprolactam).

Trotz seiner sehr hohen Flexibilität (Biege-Elastizitätsmodul: 145 N/mm²) war dieses Produkt völlig unbrauchbar: spritzgegossene Prüfkörper wiesen eine ausgeprägte Schichtstruktur auf, deren Schichten mechanisch leicht voneinander gelöst werden konnten. Extrudierte, an einem Ende längs eingeschnittene Stränge des Produkts liessen sich in Verarbeitungsrichtung sehr leicht zerreissen. An den stumpfen Rissflächen war die fibrilläre Struktur des Polymeren erkennbar. Das Polymer besass demnach eine sehr niedrige Festigkeit quer zur Verarbeitungsrichtung. Die übrigen Kennzahlen des Polymeren waren die folgenden:
Mittlere Molmasse der PA-Segmente: 2132
(unter Berücksichtigung des bei seiner Herstellung abdestillierten Caprolactams sowie 1,1 Gew.-% Caprolactam, das aus dem Polymer mit Wasser bei 85°C innerhalb von 8 Stunden extrahiert wurde)
Mittlere Molmasse beider Polyether (Terathane): 1365
Schmelzpunkt (Maximum): 212°C

### Versuch 2.2:

In derselben Weise wie in Versuch 2.1 beschrieben, wird ein Blockcopolyetheresteramid aus 28 kg Caprolactam, 8,28 kg Pripol 1013 und 14,53 kg Terathane 1000 hergestellt.

Die relative Viskosität des so erhaltenen Produkts betrug 1,65, die mittlere Molmasse seiner PA-Segmente war 2160 (entsprechend einem Verlust von 3,9 kg Caprolactam bei der Polykondensation und 0,9 Gew.-% Caprolactam im Polymer; siehe dazu Versuch 2.1).
Schmelzpunkt (Maximum): 213°C
Die Messung seines Biege-Elastizitätsmoduls an spritzgegossenen Prüfkörpern ergab einen Wert von 255 N/mm². Die Prüfkörper zeigten mechanisch leicht abzulösende Schichten, wenn auch nicht ganz so stark ausgeprägt, wie beim Produkt 2.1.

Vergleichsbeispiel 2 zeigt, dass auf diese Weise keine brauchbaren, hochflexiblen PA-6-Elastomere zugänglich sind.

### Beispiel 3

### Versuch 3.1:(zu vergleichen mit Vergleichsbeispiel 1 und Vergleichsbeispiel 2/Versuch 2.1)

Ein Blockcopolyetheresteretheramid wird aus 28 kg Caprolactam, 8,28 kg Pripol 1013, 6,25 kg Jeffamin D 2000, 9,04 kg Terathane 1000 und 4 kg Terathane 2000 unter Verwendung von 100 g Sn(II)-dioctoat (Katalysator) und 150 g Irganox 1330 (Antioxidant) auf folgende Weise hergestellt:
In einen Stahlautoklaven werden, wie in Vergleichsbeispiel 2, Caprolactam, Pripol 1013, Jeffamin D 2000 und Irganox 1330 eingefüllt und unter Rühren und Überleiten von Stickstoff auf 255°C aufgeheizt und bei dieser Temperatur 2 Stunden lang gehalten. Im Verlauf der Reaktion bildet sich die Teilstruktur aus, in der das PA-6-Segment mit dem α,ω -Diamino-poly(oxy-1,2-propylen) verknüpft ist.

Anschliessend werden die beiden Terathane-Typen zusammen mit dem Katalysator zugegeben. Nach deren Zusatz wird wie beim Versuch 1 des Vergleichsbeispiels 2 verfahren.

Das Produkt hatte folgende Kennzahlen:

| | |
|---|---|
| ♢ relative Viskosität: | 1,77 |
| ♢ Schmelzpunkt (Maximum): | 211,5°C |
| ♢ mittlere Molmasse der PA-Segmente: | 2150 |
| ♢ Verhältnis | x:y = 3,53:1 |

Das produkt war als Granulat weitgehend transparent. Es zeigte weder in Form extrudierter Stränge noch spritzgegossener Prüfkörper Schichtstrukturen oder Delaminierungs-/Fibrillierungseffekte.
Sein Biege-Elastizitätsmodul betrug 140 N/mm²; bei -40°C wurde ein Wert von 560 N/mm² gemessen. In der Prüfung zur Messung der Kerbschlagzähigkeit zeigte das Elastomere bis -40°C keinen Bruch.

### Versuch 3.2: zu vergleichen mit Vergleichsbeispiel 1 und Vergleichsbeispiel 2/Versuch 2.2)

Aus 28 kg Caprolactam, 8,28 kg Pripol 1013, 6,25 kg Jeffamin D 2000 und 11,04 kg Terathane 1000 wird unter den für Versuch 3.1 angegebenen Bedingungen ein Blockcopolyetheresteretheramid hergestellt. Katalysator und Antioxidant: wie bei Versuch 3.1.

Das Produkt hatte folgende Kennzahlen:

| | |
|---|---|
| ♢ relative Viskosität: | 1,699 |
| ♢ Schmelzpunkt (Maximum): | 211,5°C |
| ♢ mittlere Molmasse der PA-Segmente: | 2160 |
| ♢ Verhältnis | x:y = 3,53:1 |

Mit Ausnahme seines Biege-Elastizitätsmoduls, für den ein Wert von 165 N/mm² gemessen wurde, entsprach dieses Elastomer dem Produkt von Versuch 3.1.

Die Viskosität beziehungsweise die Molmasse von derartigen PA-6-Elastomeren lässt sich nach dem für konventionelle Polyamide üblichen Verfahren der Festphasennachkondensation deutlich erhöhen. Dazu wird das betreffende Produkt in feinteiliger Form - beispielsweise als Granulat - bei einer Temperatur wenig unterhalb seines Schmelzpunkts im Vakuum oder unter trockenem Stickstoff behandelt.

Die Nachkondensationsbedingungen für dieses PA-6-Elastomer waren die folgenden:

| | |
|---|---|
| Temperatur (Heizmedium): | 180°C |
| Druck: | 0,1 - 0,2 m bar |
| Dauer: | 7 Stunden |
| eingesetzte Granulatmenge: | 250 g |

Die Nachkondensationsversuche wurden mit vier weiteren Chargen durchgeführt. Die dabei erhaltenen Ergebnisse sind der nachstehenden Tabelle zu entnehmen:

| Charge | Relative Viskosität | |
|---|---|---|
| | vor Nachkondensation | nach Nachkondensation |
| 3.2/2 | 1,696 | 1,956 |
| 3.2/3 | 1,693 | 1,977 |
| 3.2/4 | 1,7 | 1,939 |
| 3.2/5 | 1,696 | 1,914 |

### Vergleichsbeispiel 4 (Produkt: gemäss DE-PS 25 23 991; Herstellverfahren: gemäss DE-OS 34 28 404 mit einer hochwirksamen Sn(II)-Verbindung als Veresterungs-Katalysator)

In einem 1-Liter-Mehrhalskolben mit Metallrührer, Destillationsvorlage, Temperaturfühler, Stickstoffzuleitung und Vakuumanschluss werden 88,5 g ω-Aminolaurinsäure, 16,92 g Dodecansäure, 159,1 g Terathane 2000 sowie 0,5 g Sn(II)-dibenzoat und 0,75 g Irganox 1330 unter Überleiten von Stickstoff aufgeschmolzen und unter Rühren vermischt. Unter diesen Bedingungen wird der Kolbeninhalt weiter aufgeheizt. Bei etwa 175°C setzt die Polykondensation mit der Bildung von Wasser (überwiegend aus ω-Aminolaurinsäure) ein. Nach etwa 2 Stunden und nach Erreichen von 260°C Produkttemperatur kommt die Wasserentwicklung praktisch zum Stillstand. Zu diesem Zeitpunkt ist die Schmelze milchig-trüb und so gut wie undurchsichtig.

Das Reaktionswasser (ca. 7 ml) wird aus der Destillatvorlage entfernt. Anschliessend wird Vakuum angelegt und unter Rühren bei 255 bis 260°C und einem Druck von 0,4 bis 0,6 mbar 75 Minuten lang polykondensiert. Im Verlauf der Polykondensation nimmt die Viskosität der Schmelze zwar beträchtlich zu, an ihrem milchig-trüben Aussehen ändert sich aber nichts. Nach Beendigung der Reaktion wird ein Teil der Schmelze in einer geeigneten Form zu einer Platte mit 3 mm Dicke verpresst und durch langsames Abkühlen zum Erstarren gebracht. Die Platte ist weiss und undurchsichtig.

Der Rest der Schmelze wird als Strang mit einem Querschnitt von 10 bis 40 mm² auf eine Metallplatte gegossen und abgekühlt. Der so erhaltene Strang unterscheidet sich in seinem Aussehen nicht von der gepressten Platte.

Aus der Platte werden 1 cm breite und ca. 8 cm lange Prüfkörper geschnitten. Daran wird der Biege-Elastizitätsmodul des Elastomeren gemessen; er betrug etwa 55 N/mm².

Trotz seiner sehr hohen Flexibilität ist dieses PA-12-Elastomer für die Herstellung von extrudierten oder spritzgegossenen Teilen wegen der mangelnden Querfestigkeit der Stränge nicht brauchbar, die sich - nach Anbringen eines Schnittes längs zur Fliessrichtung - leicht über eine Länge von durchschnittlich mehr als 5 cm zerreissen liessen (Effekt wie bei den Produkten von Vergleichsbeispiel 2). An den stumpfen Rissflächen war eine ausgeprägte Fibrillenstruktur erkennbar. Die beim Giessen der Stränge auf die Schmelze einwirkende Scherkraft hatte bereits ausgereicht, die Schmelze einer so starken Dehndeformation auszusetzen, dass eine Fibrillenstruktur resultierte.

Bei normalen Verarbeitungsprozessen - wie Spritzgiessen oder Extrudieren - treten jedoch sehr viel höhere Dehn- und Scherkräfte auf, so dass dort die Fibrillierung eines derartigen PA-12-Elastomeren wesentlich stärker störend in Erscheinung tritt.

Die übrigen Kennzahlen des Elastomeren waren die folgenden:

| | |
|---|---|
| ♢ relative Viskosität: | 1,836 |
| ♢ Schmelzpunkt (Maximum): | 165,5°C |
| ♢ mittlere Molmasse der PA-Segmente: | 1317 |

### Beispiel 4 (zu vergleichen mit Vergleichsbeispiel 4)

Unter den gleichen Reaktionsbedingungen wie beim Vergleichsbeispiel 4 wird ein Blockcopolyetheresteretheramid aus 88,5 g ω-Aminolaurinsäure, 16,92 g Dodecandisäure, 103,67 g Terathane 2000 und 55,32 g Jeffamin D 2000 hergestellt. Als Katalysator wird 0,5 g Sn(II)-dibenzoat, als Antioxidant 0,75 g Irganox 1330 verwendet.

Nach Beendigung der Polykondensation, die mit 60 Minuten Dauer kürzer als bei Vergleichsbeispiel 4 ist, wird die klare, fast transparente Schmelze des Elastomeren in der vorstehend beschriebenen Weise zu einer 3 mm dicken Platte und zu Strängen verarbeitet.

Der Biege-Elastizitätsmodul des Produkts lag bei 53 N/mm². Die Stränge wiesen aber eine deutlich höhere Querfestigkeit als die des Elastomeren von Vergleichsbeispiel 4 auf: Sie zeigten keine Fibrillenstruktur, die es ermöglicht hätte, einen Riss länger als etwa 1 cm, parallel zur Fliessrichtung zu erzeugen. Die Risse scherten stattdessen zur Seite hin aus.

Anders als bei Vergleichsbeispiel 4 waren die Rissflächen auch nicht stumpf sondern glänzend. Übrige Kennzahlen des Elastomeren:

| | |
|---|---|
| ♢ relative Viskosität: | 1,726 |
| ♢ Schmelzpunkt (Maximum): | 165,5°C |
| ♢ mittlere Molmasse der PA-Segmente: | 1317 |
| ♢ Verhältnis | x:y = 1,87:1 |

### Vergleichsbeispiel 5

Die Verbundhaftung beim Spritzgiessschweissen zweier Blockcopolyetheresteretheramide gemäss DE-PS 25 23 991, beide hergestellt nach dem Verfahren der DE-OS 34 28 404, wird hiermit demonstriert.

Das härtere Produkt (5-1) wird aus 36,7 kg Laurinlactam, 1,27 kg Dodecandisäure und 5,5 kg Terathane 1000 erhalten. Die eingesetzte Menge Katalysator (Sn(II)-dioctoat) beträgt 90 g, als Antioxidant werden 100 g Irganox 1330 verwendet.

Zur Herstellung des Produkts wird zunächst das Lactam und die Dicarbonsäure in einen 100-Liter-Autoklaven unter Stickstoff aufgeschmolzen und die entstandene Mischung durch Rühren homogenisiert.
Dann werden beide Komponenten innerhalb von vier Stunden bei 285 bis 290°C zum korrespondierenden carboxylterminierten Polyamid umgesetzt.

Nach Abkühlen der Schmelze auf 260°C werden die übrigen oben genannten Komponenten zugegeben und mit dem Polyamid vermischt.

Die Polykondensation erfolgt unter Rühren und einem Druck von 0,5 bis 1 mbar. Etwa 40 Minuten nach dem Beginn der Vakuumphase wird die Polykondensation beendet. Die relative Viskosität des Elastomeren war 1,93. Bei einer Zuggeschwindigkeit von 200 mm/min betrug seine Reissfestigkeit 33 N/mm² und seine Reissdehnung 255 %.

Das flexiblere Produkt (5-2) wird in analoger Weise aus 30 kg Laurinlactam, 2,57 kg Dodecandisäure und 12 kg Terathane erhalten.

| | |
|---|---|
| Katalysator: | 90 g Sn(II)-dioctoat |
| Antioxidant: | 135 g Irganox 1330 |

Nach 60-minütiger Polykondensation fiel das Produkt mit einer relativen Viskosität von 1,963 an. Seine Reissfestigkeit betrug 35 N/mm², seine Reissdehnung war 285 bis 290 %.

Zur Messung des Haftverbundes zwischen beiden Elastomeren werden zunächst aus dem Material 5-1 halbe Zugstäbe (10 mm breit und 4 mm dick) hergestellt. Dazu wird die Hälfte der betreffenden Spritzgussform mit einem entsprechend angepassten Metallstück ausgefüllt.

Das Polymer 5-1 wird unter folgenden Bedingungen spritzgegossen:

| | |
|---|---|
| Massetemperatur: | 237°C |
| Druck: | 733 bar |
| Dosierzeit: | 10,8 sec |
| Einspritzzeit: | 0,9 sec |
| Zykluszeit: | 38 sec |

Anschliessend werden anstelle des Metallstücks die halben Prüfstäbe von 5-1 in die Form eingelegt. Das Elastomer 5-2 wird dann unter folgenden Bedingungen aufgespritzt:

| | |
|---|---|
| Massetemperatur: | 234°C |
| Druck: | 733 bar |
| Dosierzeit: | 10,4 sec |
| Einspritzzeit: | 1,35 sec |
| Zykluszeit: | 43,6 sec |

An den so erhaltenen, aus 5-1 und 5-2 bestehenden Teilen wird eine Zugprüfung unter den gleichen Bedingungen wie für 5-1 und 5-2 durchgeführt.

Es wurde eine Reissfestigkeit von 16,4 N/mm² bei einer Reissdehnung von 35 % gemessen.

### Beispiel 5

In derselben Weise wie in Vergleichsbeispiel 5 beschrieben, wird der Haftverbund zwischen dem Elastomer 5-1 und dem folgenden Blockcopolyetheresteretheramid 5-3 geprüft. Das PA-12-Elastomer 5-3 wird aus 30 kg Laurinlactam, 3,65 kg Dodecandisäure, 10,15 kg Terathane 1000 und 2,25 kg α,ω -Diamino-poly(oxy-1,2-propylen) mit einer mittleren Molmasse von 425 (Jeffamin D 400 der Firma Texaco) nach einem ähnlichen Verfahren hergestellt wie das Produkt 5-2.

| | |
|---|---|
| Katalysator: | 90 g Sn(II)-dioctoat |
| Antioxidant: | 135 g Irganox 1330 |

Das Elastomer fiel in einer relativen Viskosität von 1,957 an.
Verhältnis x:y = 1,93:1
Seine Flexibilität entsprach mit einem Biege-Elastizitätsmodul von 280 N/mm² der des Elastomeren 5-2 (275 N/mm²). Die Reissfestigkeit von 5-3 war 37 N/mm² bei einer Reissdehnung von 258 %.

Zur Erzeugung des Haftverbundes mit 5-1 wird 5-3 unter folgenden Bedingungen verarbeitet:

| | |
|---|---|
| Massetemperatur: | 236°C |
| Druck: | 733 bar |
| Dosierzeit: | 8,7 sec |
| Einspritzzeit: | 1,31 sec |
| Zykluszeit: | 38,4 sec |

Die Zugprüfung des Elastomerverbunds 5-1/5-3 ergab eine Reissfestigkeit von 16,7 N/mm² und eine Reissdehnung von 157 %. Aus den betreffenden Spannungs-/Dehnungsdiagrammen wurden (durch Integration) Bruchenergien ermittelt, die zwischen 300 und 400 % über den Werten der Materialkombination 5-1/5-2 (Vergleichsbeispiel 5) lagen.

### Beispiel 6

80 Gew.-Teile des Produkts von Beispiel 3/Versuch 3.2 werden in mit 20 Gew.-Teilen eines mit 0,5 Gew.-Teilen Maleinsäureanhydrid gepfropften, hochflexiblen Ethylen/Propylen-Copolymeren (Ethylengehalt = 84 Mol-%, Schmelzpunkt: ca. 48°C) in einem Zweischneckenextruder (WPF ZSK-30 der Firma Werner und Pfleiderer, Stuttgart) aufgeschmolzen, in der Schmelze vermischt und stranggranuliert.

Die so erhaltene Polymermischung wurde zu Prüfkörpern verarbeitet, an denen die folgenden mechanischen Eigenschaften ermittelt wurden:

| | |
|---|---|
| Biege-Elastizitätsmodul: | 100 N/mm² |
| Kerbschlagzähigkeit bei -40°C: | Kein Bruch |

Dieses Beispiel zeigt, dass durch Zumischen von Polyolefinelastomeren des hier verwendeten Typs zu den erfindungsgemässen Polyamidelastomeren eine Erhöhung der Flexibilität möglich ist.

## Patentansprüche

1. Thermoplastisch verarbeitbare elastomere Blockcopolyetheresteretheramide aus sich wiederholenden Einheiten der allgemeinen Formel 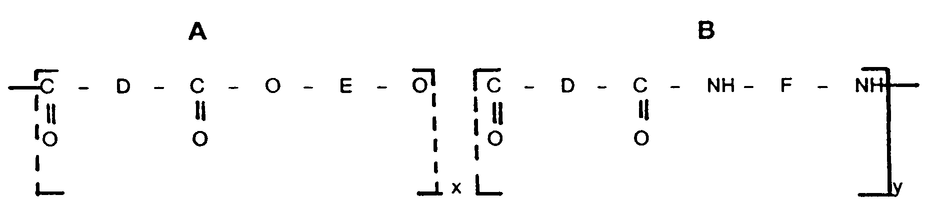 in der 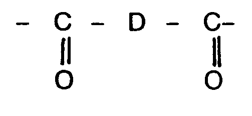 ein carboxylgruppenterminiertes
Polyamidsegment mit einer mittleren Molmasse von 700 bis 10'000 darstellt, -O-E-O- ein Poly(oxytetramethylen)-Segment mit einer mittleren Molmasse von 600 bis 3'500 ist, -NH-F-NH- ein aminogruppenterminiertes Poly(oxy-1,2-propylen)-Segment mit einer mittleren Molmasse von 350 bis 2'500 darstellt, x und y ganze Zahlen sind und die Anzahl der betreffenden, beliebig angeordneten, sich wiederholdenden Einheiten angeben, wobei das Verhältnis x:y der Komponenten A und B zwischen 5:1 und 1:5 schwankt.

2. Blockcopolyetheresteretheramide nach Anspruch 1, deren Biege-Elastizitätsmodul nach DIN 53452 zwischen 40 und 700 N/mm² liegt.

3. Mischung aus Blockcopolyetheresteretheramiden nach den Ansprüchen 1 oder 2 und Copolyolefinen, die Carboxyl- und/oder Carboxylat- und/oder Carbonsäureanhydridgruppen und/oder andere polare Molekülreste tragen.

4. Blockcopolyetheresteretheramide nach den Ansprüchen 1 bis 3, dadurch gekennzeichnet, dass das Polyamidsegment 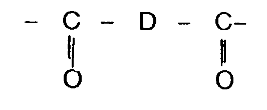 aus Lactamen oder den entsprechenden ω -Amino-α-carbonsäuren mit 6 bis 12 Kohlenstoffatomen oder Mischungen aus diesen Komponenten und Dicarbonsäuren mit 6 bis 36 Kohlenstoffatomen zur Carboxylgruppenterminierung hergestellt ist.

5. Blockcopolyetheresteretheramide nach Anspruch 4, dadurch gekennzeichnet, dass die Lactame oder ω-Amino-α-carbonsäuren solche mit 11 oder 12 C-Atomen sind.

6. Verfahren zur Herstellung der Blockpolyetheresteretheramide gemäss Anspruch 1, dadurch gekennzeichnet, dass ein Gemisch aus α.ω-Dihydroxypolyoxytetramethylen (Komponente -O-E-O-) und α.ω-Diaminopolyoxy-1.2-propylen (Komponente -NH-F-NH-) mit äquimolaren Mengen carboxylterminierter Polyamide (Komponente -CO-D-CO-) polykondensiert wird.

7. Verwendung der Blockcopolyetheresteretheramide gemäss Anspruch 1 bis 5 zur Herstellung von Formkörpern durch Extrusion, Spritzgiessen, Verbundspritzgiessen, Spritzgussschweissen oder Blasformen, gegebenenfalls in Form von Polymermischungen.

## Claims

1. Thermoplastically-processible elastomeric block copolyetheresteretheramides of recurring units corresponding to the general formula 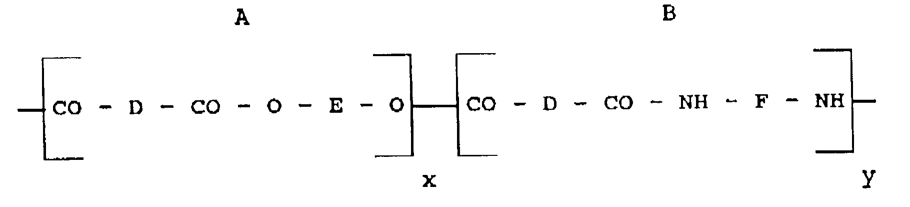 in which -CO-D-CO- represents a carboxyl group-terminated polyamide segment having an average molar mass of 700 to 10,000, -O-E-O- is a poly(oxytetramethylene)segment having an average molar mass of 600 to 3,500, -NH-F-NH- represents an amino group-terminated poly(oxy-1,2-propylene)segment having an average molar mass of 350 to 2,500, x and y are integers and indicate the number of the respective, randomly-arranged, recurring units, the ratio x : y of components A and B varying between 5 : 1 and 1 : 5.

2. Block copolyetheresteretheramides according to claim 1, whose bending elastic modulus according to DIN 53452 is between 40 and 700 N/mm².

3. A mixture of block copolyetheresteretheramides according to claims 1 or 2 with copolyolefins carrying carboxyl and/or carboxylate and/or carboxylic acid anhydride groups and/or other polar molecular groups.

4. Block copolyetheresteretheramides according to claims 1 to 3, characterised in that the polyamide segment -CO-D-CO- is prepared from lactams or the corresponding ω-amino-α-carboxylic acids having 6 to 12 carbon atoms or mixtures of these compounds and dicarboxylic acids having 2 to 36 carbon atoms for carboxyl group termination.

5. Block copolyetheresteretheramides according to claim 4, characterised in that the lactams or ω-amino-α-carboxylic acids are those having 11 or 12 C atoms.

6. A process for the preparation of blocked copolyetheresteretheramides according to claim 1, characterised in that a mixture of α,ω-dihydroxypoly(oxytetramethylene) (component -O-E-O- ) and α,ω-diamino-poly(oxy-1,2-propylene) (component -NH-F-NH-) is polycondensed with equimolar amounts of carboxyl-terminated polyamide (component -CO-D-CO-).

7. Use of the block copolyetheresteretheramides according to claims 1 to 5, for producing shaped articles by extrusion, injection-moulding, sandwich injection-moulding, injection welding or blow-moulding, optionally in the form of polymer mixtures.

## Revendications

1. Copolyétheresterétheramide séquencé élastomère, transformable par des procédés faisant appel à la thermoplasticité, constitué de motifs de formule générale 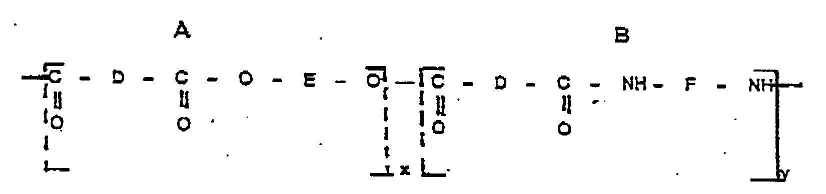 dans laquelle
-CO-D-CO- représente un segment polyamide terminé par des groupes carboxyle, dont la masse moléculaire moyenne vaut de 700 à 10000,
-O-E-O représente un segment poly(oxytétraméthylène) dont la masse moléculaire moyenne vaut de 600 à 3500,
-NH-F-NH- représente un segment poly(oxy-1,2-propylène) terminé par des groupes amino, dont la masse moléculaire moyenne vaut de 350 à 2500,
x et y représentent des nombres entiers qui indiquent le nombre des motifs concernés, disposés de manière quelconque,
le rapport x/y des composants A et B valant entre 5/1 et 1/5.

2. Copolyétheresterétheramide séquencé conforme à la revendication 1, dont le module d'élasticité en flexion, mesuré selon la norme DIN-53452, vaut entre 40 et 700 N/mm².

3. Mélange de copolyétheresterétheramides séquencés conformes à la revendication 1 ou 2 et de copolyoléfines qui portent des groupes carboxyle et/ou des groupes carboxylate et/ou des groupes anhydride d'acide carboxylique et/ou d'autres restes moléculaires polaires.

4. Copolyétheresterétheramide séquencé conforme à l'une des revendications 1 à 3, caractérisé en ce que le segment polyamide -CO-D-CO- est préparé à partir de lactames ou d'acides ω-amino-α-carboxyliques comportant de 6 à 12 atomes de carbone, ou de mélanges de ces composés, et d'acides dicarboxyliques comportant de 6 à 36 atomes de carbone, qui fournissent les groupes carboxyle terminaux.

5. Copolyétheresterétheramide séquencé conforme à la revendication 4, caractérisé en ce que les lactames ou les acides ω-amino-α-carboxyliques sont ceux qui comportent 11 ou 12 atomes de carbone.

6. Procédé de préparation de copolyétheresterétheramides séquencés conformes à la revendication 1, caractérisé en ce que l'on effectue la polycondensation d'un mélange d'α,ω-dihydroxy-poly(oxytétraméthylène) (composant -O-E-O) et d'α,ω-diamin-poly(oxy-1,2-propylène) (composant -NH-F-NH) avec des quantités équimolaires de polyamide à groupes terminaux carboxyle (composant -CO-D-CO-).

7. Utilisation de copolyétheresterétheramides séquencés conformes à l'une des revendications 1 à 5, eventuellement sous forme de mélanges de polymères, pour la fabrication de pièces moulées par extrusion, injection, injection de composites, injection-soudage, ou soufflage.
